Europäisches Patentamt

European Patent Office

Office européen des brevets

(11) Veröffentlichungsnummer: **0 513 505 A1**

# EUROPÄISCHE PATENTANMELDUNG

(21) Anmeldenummer: **92105429.2**

(22) Anmeldetag: **30.03.92**

(51) Int. Cl.5: **G06F 12/06**, G06F 11/28, G06F 13/00

(30) Priorität: **04.05.91 DE 4114545**

(43) Veröffentlichungstag der Anmeldung:
**19.11.92 Patentblatt 92/47**

(84) Benannte Vertragsstaaten:
**AT CH DE FR GB IT LI SE**

(71) Anmelder: **Heidelberger Druckmaschinen
Aktiengesellschaft
Kurfürsten-Anlage 52-60**
**W-6900 Heidelberg(DE)**

(72) Erfinder: **Marten, Peter
Lucas-Cranach-Strasse 4
W-6900 Heidelberg(DE)**

(74) Vertreter: **Weiss, Wolfgang, Dr. et al
Kurfürsten-Anlage 52-60
W-6900 Heidelberg(DE)**

(54) **Schattenregister für ein Nur-Schreibe-Register.**

(57) Die Erfindung betrifft eine Schaltungsanordnung für den Betrieb eines Computers, insbesondere Mikrocomputers, mit mindestens einem Arbeitsregister, in das unter bestimmten Adressen Informationen ein- und wieder auslesbar sind und mit einer Rücklese-Einrichtung zur bei einem Programmschritt erfolgenden Rückmeldung der zuletzt eingeschriebenen Information an einen Prozessor des Computers. Es ist vorgesehen, daß dem Arbeitsregister (AR) mindestens ein Rückmelde-Register (RR) derart zugeordnet ist, daß die Information (Daten) unter der gleichen Adresse sowohl in das Arbeitsregister (AR) als auch in das Rückmelde-Register (RR) eingeschrieben wird und daß zum Einschreiben einer neuen Information die im Rückmelde-Register (RR) gespeicherte Information dem Prozessor zugeleitet wird.

Fig.1

Die Erfindung betrifft eine Schaltungsanordnung für den Betrieb eines Computers, insbesondere Mikrocomputers, mit mindestens einem Arbeitsregister, in das unter bestimmten Adressen Informationen ein- und wieder auslesbar sind und mit einer Rücklese-Einrichtung zur bei einem Programmschritt erfolgenden Rückmeldung der zuletzt eingeschriebenen Information an einen Prozessor des Computers.

Es ist bekannt, bei Mikrocomputern sogenannte Peripheriebausteine vorzusehen (in diesem Zusammenhang sei auf das Fachbuch "Halbleiter-Schaltungstechnik", Tietze/Schenk, 9te Auflage, S. 678ff verwiesen). Diese weisen Register oder dergleichen auf, in denen unter bestimmten Adressen Informationen (Daten) gespeichert werden. Der Mikroprozessor (CPU) des Mikrocomputers ist mit seinen Adressleitungen an das Register angeschlossen. Liegt beispielsweise ein Write-Befehl vor und wird eine bestimmte Adresse des Registers angesteuert, so werden unter dieser Adresse die Daten abgelegt. Wird im Zuge des Programmablaufs bei einem weiteren Programmschritt eine Adresse des Registers aktiviert, so ändert sich bei der zum Beispiel aus einem Acht-Bit-Wort bestehenden Information unter Umständen nur ein Bit; die übrigen sieben Bits behalten ihren vorherigen Zustand bei. Dies setzt voraus, daß beim Einschreiben der Daten unter dieser Adresse der Zustand der einzelnen Bits der Daten dem Prozessor des Mikrocomputers bekannt ist.

Sofern bei den bekannten Peripheriebausteinen nicht rücklesbare Register eingesetzt werden, ist die Information nicht nur in dem Peripheriebaustein (Register), sondern auch - über einen zweiten Mikroprozessor-Zugriff - in einem statischen oder dynamischen Speicher, insbesondere RAM (Random Access Memory) abzuspeichern. Weist der Peripheriebaustein D-Flip-Flop-Latches auf, so werden parallel zu den Ausgängen der D-Flip-Flop-Latches Tri-State schaltbare Datentreiber auf einen internen Datenbus zurückgeführt, wodurch der aktuell anliegende Datenwert zurückgelesen werden kann. Diese bekannten Lösungen arbeiten aufgrund eines nochmaligen Zugriffs relativ langsam und sind ferner relativ aufwendig und mit entsprechenden Kosten verbunden.

Der Erfindung liegt daher die Aufgabe zugrunde, eine Schaltungsanordnung der eingangs genannten Art zu schaffen, die schnell arbeitet und preiswert ist.

Diese Aufgabe wird erfindungsgemäß dadurch gelöst, daß dem Arbeitsregister mindestens ein Rückmelde-Register derart zugeordnet ist, daß die Information (Daten) unter der gleichen Adresse sowohl in das Arbeitsregister als auch in das Rückmelde-Register eingeschrieben wird und daß zum Einschreiben einer neuen Information die im Rückmelde-Register gespeicherte Information dem Prozessor zugeleitet wird. Durch das zusätzliche Rückmelde-Register, das als sogenanntes "Schattenregister" bezeichnet werden soll, ist es möglich, die Informationen unter jeweils einer Adresse sowohl in dem Arbeitsregister als auch in dem Schattenregister niederzulegen. Erfindungsgemäß wird eine "Adressenspiegelung" vorgenommen, das heißt, die Information gelangt beim Einschreiben in das Arbeitsregister und gleichzeitig und unter "äußerlich" gleicher Adresse in einen speziellen Speicherbereich, nämlich in das Rückmelde-Register. Vorzugsweise ist dazu vorgesehen, daß die Adresse des Arbeitsregisters selbsttätig in eine fest zugeordnete Rückmelderegister-Adresse intern umgesetzt wird. Wenn also eine bestimmte Adresse des Arbeitsregisters angesteuert wird, erfolgt automatisch unter einer anderen, jedoch nur intern benutzten Adresse ein Zugriff auf das Schattenregister, so daß die Informationen sowohl in das Arbeitsregister als auch in das Schattenregister in jeweils fest zueinander zugeordneter Adressenkonstellation eingeschrieben werden, wobei nach "außen" jedoch nur die Adresse des Arbeitsregisters in Erscheinung tritt. Dadurch ist für die Rücklesbarkeit ein zusätzlicher Mikroprozessor-Zugriff nicht erforderlich.

Die Zuordnung der Adressen von Arbeitsregister und Rückmelde-Register sieht beispielsweise vor, daß den Adressen 1000 bis 1100 des Arbeitsregisters zum Beispiel die Adresse 500 bis 600 des Rückmelde-Registers fest zugeordnet sind. Wird also zum Beispiel die Adresse 1000 des Arbeitsregisters vom Prozessor angesteuert, so erfolgt erfindungsgemäß gleichzeitig eine interne Ansteuerung der Adresse 500. Erfolgt dann - in einem weiteren Programmschritt - eine Ansteuerung der Adresse 1001 des Arbeitsregisters, so wird automatisch die Adresse 501 des Rückmelde-Registers mit angesteuert. Der Programmablauf selbst berücksichtigt jedoch nicht die internen Adressen des Rückmelde-Registers, sondern nur die "äußeren" des Arbeitsregisters, so daß aufgrund der erfindungsgemäßen Ausbildung keine kompliziertere Programmstruktur notwendig ist.

Die erfindungsgemäße Adressenspiegelung erfordert nur einen einmaligen Mikroprozessor-Zugriff, so daß das Programm mit großer Geschwindigkeit ablaufen kann, wobei vorzugsweise Standardbausteine als Peripheriebausteine eingesetzt werden können. Aufwendige Spezialbausteine - so wie sie im Stand der Technik erforderlich sind - werden nicht benötigt. Die Zuordnung der Arbeitsregister-Adresse zur Rückmelde-Register-Adresse kann mit sehr einfachen Mitteln realisiert werden.

Vorzugsweise ist das Rückmelde-Register als Speicher mit wahlfreiem Zugriff (RAM = Random Access Memory) ausgebildet.

Prinzipiell sind als Rückmelde-Register sämtliche informationsspeichernde Mittel denkbar.

Da ein Mikrocomputer zumeist ein RAM aufweist, sind nur wenige zusätzliche Bauteile erforderlich, da zur Ausbildung der erfindungsgemäßen Ausgestaltung dieses RAM mitbenutzt werden kann.

Nach einer Weiterbildung der Erfindung ist eine Logikeinrichtung vorgesehen, die den gleichzeitigen Zugriff von Arbeits- und Rückmelde-Register unter gleicher Adresse durch eine Zuordnungsverknüpfung ermöglicht. Diese Logikeinrichtung kann als Hardware-Schaltung ausgebildet sein. Vorzugsweise ist die Logikeinrichtung durch ein PLD (Programmable Logic Device) gebildet.

Für eine weitere, besonders bevorzugte Lösung können sogenannte Peripheriebausteine mit einem nur teilweise rücklesbaren Register zum Einsatz kommen. Es ist dann vorgesehen, daß der nicht rücklesbare Bereich des Registers das Arbeitsregister und der rücklesbare Bereich des Registers das Rückmelde-Register bildet.

Eine andere mögliche Lösung besteht darin, daß die Peripheriebausteine so aufgebaut sind, daß einzelne oder mehrere Datenbits einer Adresse dieser Bausteine rücklesbar bzw. nicht rücklesbar sind.

Die Zeichnung veranschaulicht die Erfindung anhand mehrerer Ausführungsbeispiele und zwar zeigt:

Fig. 1     ein Prinzipschaltbild der Schaltungsanordnung nach einem ersten Ausführungsbeispiel,

Fig. 2     ein Prinzipschaltbild der Schaltungsanordnung nach einem weiteren Ausführungsbeispiel und

Fig. 3     ein Prinzipschaltbild der Schaltungsanordnung nach einem letzten Ausführungsbeispiel.

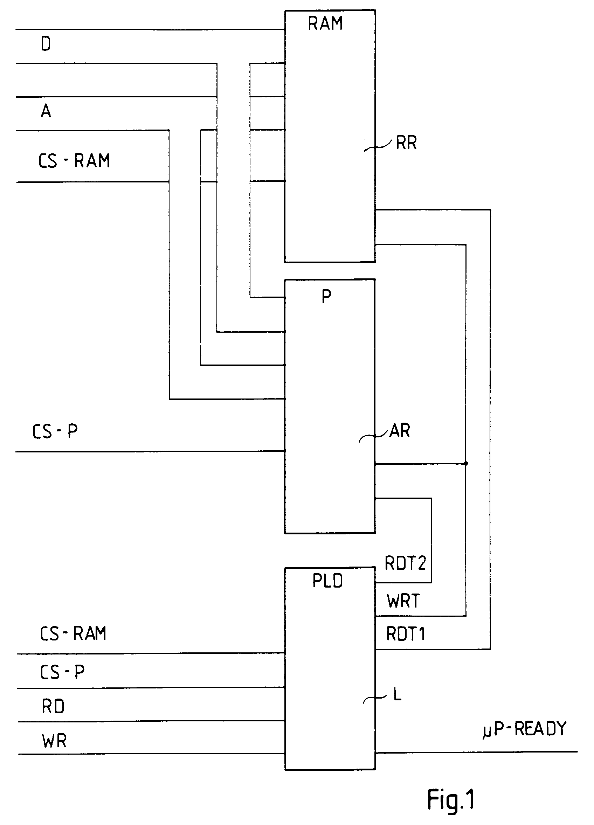

Gemäß Figur 1 steht - ein nicht dargestellter - Mikrocomputer bzw. Mikroprozessor $\mu$P über einen Datenbus D und einen Adressbus A mit einem RAM und mit einem Peripheriebaustein P in Verbindung. Zum Aktivieren des RAM's und des Peripheriebausteines P sind Chip-Select-Leitungen CS-RAM für das RAM und CS-P für den Peripheriebaustein P vorgesehen. Beim Ansteuern dieser Leitungen tritt der entsprechende Baustein in Aktion. Ferner ist eine Logikeinrichtung L vorgesehen, die als PLD (Programmable Logic Device) ausgebildet ist. Zum PLD führen Chip-Select-Leitungen CS-RAM und CS-P. Ferner führen zum PLD eine Read-Befehlleitung RD und eine Write-Befehlleitung WR.

Der Peripheriebaustein P weist ein Arbeitsregister AR und das RAM ein Rücklese-Register RR auf. Das PLD ist über eine Leitung RDT2 mit dem Peripheriebaustein P verbunden. Auf dieser Leitung RDT2 kann ein PLD generiertes Read-Signal für den Peripheriebaustein P erzeugt werden. Ferner ist eine Leitung WRT vorgesehen, die das PLD mit dem Peripheriebaustein P und dem RAM verbindet. Auf dieser Leitung kann ein PLD generiertes Write-Signal erzeugt werden. Schließlich ist das PLD mit dem RAM über eine Leitung RDT1 verbunden, die der Zuführung eines PLD generierten Read-Signals für das RAM dient. Ferner ist eine Leitung $\mu$P-READY vorgesehen, die ein Fertigsignal bei abgeschlossener Datenübernahme abgibt, so daß die Daten nicht länger anzuliegen brauchen.

Es ergibt sich folgende Funktionsweise:

Es sei angenommen, daß in dem Arbeitsregister AR des Peripheriebausteins eine bestimmte Information (z.B. ein 8-Bit-Wort) gespeichert ist. Diese Information ist ebenfalls in einem zugehörigen Schattenregister, nämlich dem Rückmelde-Register RR des RAM's abgelegt. Soll nun - bei einem weiteren Programmschritt - eine neue Information im Arbeitsregister AR des Peripheriebausteins P gespeichert werden, so wird - vom nicht dargestellten - Mikroprozessor $\mu$P zunächst das PLD aktiviert, so daß dieses ein Read-Signal auf der Leitung RDT1 erzeugt, wodurch die Information aus dem Rückmelde-Register RR des RAM's ausgelesen und dem Mikroprozessor $\mu$P zur Verfügung gestellt wird. Hierdurch erhält der Mikroprozessor $\mu$P Kenntnis von dem bisherigen Zustand. Wird nun (Adressbus A) eine neue Information in das Arbeitsregister AR des Peripheriebausteins P eingeschrieben, so erfolgt unter einer entsprechenden zugeordneten internen Adresse die gleichzeitige Abspeicherung im Rückmelde-Register RR des RAM's. Diese Information werden über den Datenbus D den entsprechenden Bausteinen zugeführt. Dabei wird die zuvor ausgelesene alte Information mit berücksichtigt. Wenn sich also nur ein Bit des zum Beispiel 8 Bit aufweisenden Datenworts bei der neuen Information gegenüber der alten verändert, so bleiben die Zustände der übrigen 7 Bits entsprechend erhalten, da sie durch den vorherigen Lesevorgang bekannt sind. Für das Einschreiben der Information generiert der Mikroprozessor $\mu$P ein Write-Signal auf der Leitung WR. Dieses Write-Signal wird von dem PLD umgesetzt in ein von der PLD generiertes Write-Signal, das über die Leitung WRT sowohl dem RAM als auch dem Peripheriebaustein P zugeleitet wird.

Bei der zuvor beschriebenen Ausführungsform ist unterstellt, daß das RAM ein Bestandteil des Mikrocomputers ist. Nach einem anderen Ausführungsbeispiel kann - gemäß Figur 1 - jedoch auch vorgesehen sein, daß der Peripheriebaustein ein Register aufweist, der ein Arbeitsregister AR und ein Rückmelde-Register RR enthält. Nur in einem solchem Falle ist die Leitung RDT2 zum Lesen des Inhalts des Rückmelde-Registers RR erforderlich.

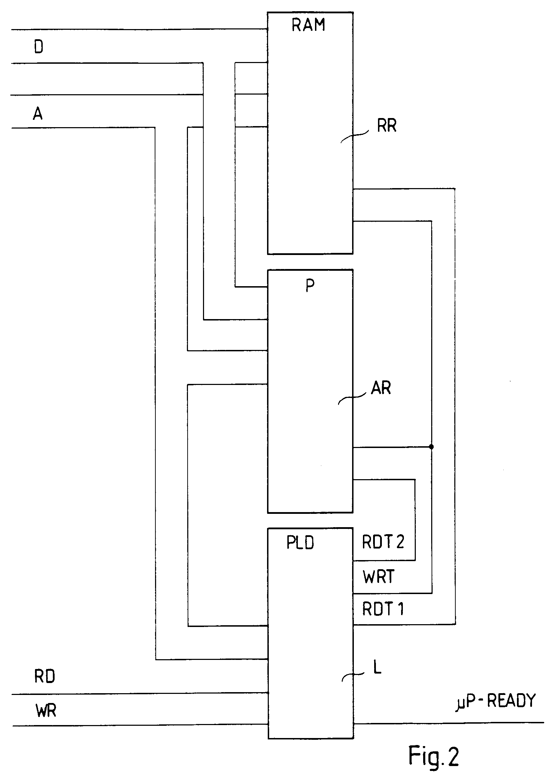

In der Figur 2 ist ein anderes Ausführungsbeispiel dargestellt, daß sich von dem der Figur 1 dadurch unterscheidet, daß der Adressbus A sowohl zum RAM als auch zum Peripheriebaustein P und überdies auch zum PLD geführt ist. Innerhalb eines bestimmten Adressenbereichs ist sichergestellt, daß beim Einschreiben von Informationen diese sowohl in das RAM (Rückmelde-Register RR) als auch in das Arbeitsregister AR des Peripheriebausteins P eingeschrieben werden. Auch hier kann vorgesehen sein, daß das RAM des Mikrocomputers mitbenutzt wird oder daß das Register des Peripheriebausteins sowohl das Arbeitsregister AR als auch das Rückmelde-Register RR aufweist. Entsprechend ist eine Leitung RDT2 erforderlich oder nicht.

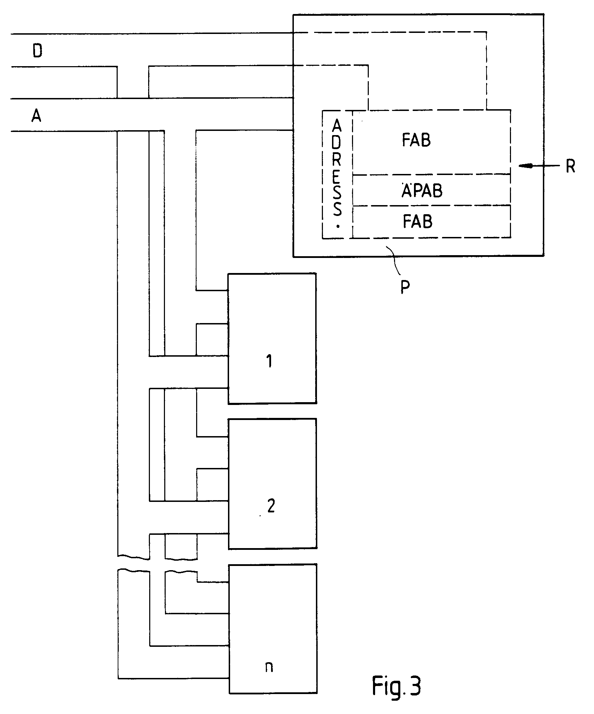

Schließlich zeigt Figur 3 ein letztes Ausführungsbeispiel, bei dem der Datenbus D und der Adressbus A mit mehreren Peripheriebausteinen 1, 2 bis n verbunden sind. In entsprechende Speicher der Peripheriebausteine 1, 2 bis n können lediglich Daten des Datenbusses D eingeschrieben werden. Der in Figur 3 oben rechts dargestellte Baustein P weist ein Register R auf, in das Informationen des Datenbusses D unter entsprechenden Adressen des Adressbusses A einschreibbar sind und auch gelesen werden können. Hierzu ist das Register R in Bereiche unterteilt. Es liegt ein freier Adressbereich FAB vor, der eine RAM-Funktion hat. Ferner ist ein äquivalenter Portadressbereich ÄPAB vorgesehen, der zu den Portadressen der Peripheriebausteine 1, 2 bis n die RAM-Adressen des Bausteins P innerhalb des freien Adressbereiches FAB bereitstellt. Es besteht eine entsprechende Zuordnungsverknüpfung. Hierdurch ist ein Arbeitsregister und ein Rückmelde-Register realisiert, wobei durch Adressieren einer Adresse des Arbeitsregisters gleichzeitig auch der entsprechende Speicherplatz des Rückmelde-Registers angesprochen wird.

Aufgrund der erfindungsgemäßen Ausbildung läßt sich nicht nur eine schnelle und einfach aufgebaute und damit preiswerte Schaltungsanordnung schaffen, sondern es ist auch eine hohe Packungsdichte der Bauteile (IC's) auf der Platine möglich. Dabei ist insbesondere vorgesehen, daß ein hoher Bestückungsanteil mit SMD-Bauteilen realisiert wird (Surface Mounted Device). Die Logikeinrichtung, die die Koordination von Arbeitsregister und Rückmelde-Register vornimmt, führt quasi ein Timing-Management aus, was unter anderem zu der erwähnten Adressenspiegelung führt. Die Erfindung ist nicht auf einen bestimmten Mikrocomputertyp beschränkt, sondern allgemein anwendbar.

So ist es in der Druckmaschinentechnik z.B. möglich, eine Steuer- und Überwachungsschaltung erfindungsgemäß auszugestalten, wobei die Steuer- und Überwachungschaltung z.B. ein 8-Bit-Datenwort verwendet, bei dem der Zustand jedes Bits ("0" oder "1") einen bestimmten Betriebszustand kennzeichnet (z.B. Antrieb ein, Auslegerförderer ein usw.).

## Patentansprüche

1. Schaltungsanordnung für den Betrieb eines Computers, insbesondere Mikrocomputers, mit mindestens einem Arbeitsregister, in das unter bestimmten Adressen Informationen ein- und wieder auslesbar sind und mit einer Rücklese-Einrichtung zur bei einem Programmschritt erfolgenden Rückmeldung der zuletzt eingeschriebenen Information an einen Prozessor des Computers,
   **dadurch gekennzeichnet**,
   daß dem Arbeitsregister (AR) mindestens ein Rückmelde-Register (RR) derart zugeordnet ist, daß die jeweilige Information (Daten) unter der gleichen Adresse sowohl in das Arbeitsregister (AR) als auch in das Rückmelde-Register (RR) eingeschrieben wird und daß zum Einschreiben einer neuen Information die im Rückmelde-Register (RR) gespeicherte Information dem Prozessor zugeleitet wird.

2. Schaltungsanordnung nach Anspruch 1,
   **dadurch gekennzeichnet**,
   daß das Rückmelde-Register (RR) als Speicher mit wahlfreiem Zugriff (RAM = Random Access Memory) ausgebildet ist.

3. Schaltungsanordnung nach einem der vorhergehenden Ansprüche,
   **dadurch gekennzeichnet**,
   daß das RAM Bestandteil des Mikrocomputers ist.

4. Schaltungsanordnung nach einem der vorhergehenden Ansprüche **gekennzeichnet durch** eine Logikeinrichtung (L), die den gleichzeitigen Zugriff von Arbeits- und Rückmelde-Register (AR, RR) unter gleicher Adresse durch eine Zuordnungsverknüpfung der Logikeinrichtung (L) ermöglicht.

5. Schaltungsanordnung nach einem der vorhergehenden Ansprüche,
   **dadurch gekennzeichnet**,
   daß die Logikeinrichtung (L) als diskrete Hardware-Schaltung ausgebildet ist.

6. Schaltungsanordnung nach einem der vorhergehenden Ansprüche,
   **dadurch gekennzeichnet**,
   daß die Logikeinrichtung (L) durch ein PLD (Programmable Logic Device) gebildet ist.

**7.** Schaltungsanordnung nach einem der vorhergehenden Ansprüche,
**gekennzeichnet durch** mindestens einen Peripheriebaustein (P) mit mindestens einem nur teilweise rücklesbaren Register (R), wobei der nicht rücklesbare Bereich des Registers (R) das Arbeitsregister (AR) und der rücklesbare Bereich des Registers (R) das Rückmelde-Register (RR) bildet.

Fig.1

Fig.2

Fig.3

Europäisches Patentamt

**EUROPÄISCHER RECHERCHENBERICHT**

Nummer der Anmeldung

EP    92 10 5429

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN vol. 7, no. 224 (P-227)5. Oktober 1983 & JP-A-58 114 258 ( PANA FACOM KK ) 7. Juli 1983 * Zusammenfassung * --- | 1-7 | G06F12/06 G06F11/28 G06F13/00 |
| X | PATENT ABSTRACTS OF JAPAN vol. 15, no. 47 (P-1162)5. Februar 1991 & JP-A-2 281 341 ( MATSUSHITA GRAPHIC COMMUN SYST INC ) 19. November 1990 * Zusammenfassung * --- | 1-7 | |
| P,X | PATENT ABSTRACTS OF JAPAN vol. 15, no. 266 (P-1223)5. Juli 1991 * Zusammenfassung * | 1-7 | |
| X | & JP-A-3 085 658 (NEC CORP) 10. April 1991 --- | 1-7 | |
| A | PATENT ABSTRACTS OF JAPAN vol. 12, no. 226 (P-722)28. Juni 1988 & JP-A-63 020 545 ( YOKOGAWA HEWLETT PACKARD LTD ) 28. Januar 1988 * Zusammenfassung * ----- | 1-7 | |

| | RECHERCHIERTE SACHGEBIETE (Int. Cl.5) |
|---|---|
| | G06F |

Der vorliegende Recherchenbericht wurde für alle Patentansprüche erstellt

| Recherchenort | Abschlußdatum der Recherche | Prüfer |
|---|---|---|
| BERLIN | 30 JULI 1992 | R. ABRAM |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

................................................................

& : Mitglied der gleichen Patentfamilie, übereinstimmendes Dokument

EPO FORM 1503 03.82 (P0403)